# EUROPEAN PATENT SPECIFICATION

(11) **EP 3 302 890 B1**
(45) Date of publication and mention of the grant of the patent: **04.11.2020**
(21) Application number: 16804505.2
(22) Date of filing: 03.06.2016
(51) Int. Cl.: B25F 5/02, H02K 9/00

(54) **POWER TOOL HOUSINGS**
GEHÄUSE FÜR ELEKTROWERKZEUG
BOÎTIERS D'OUTIL ÉLECTRIQUE

(30) Priority: 05.06.2015 US 201562171768 P
(43) Date of publication of application: 11.04.2018
(73) Proprietor: Ingersoll-Rand Industrial U.S., Inc., Davidson, NC 28036 (US)
(72) Inventor: BARTOSZEK, Jason Christopher, Bethlehem, Pennsylvania 18020 (US); JOHNSON, Joshua Odell, Allentown, Pennsylvania 18104 (US); ELY, Sean C., Flemington, New Jersey 08822 (US); LEAVITT, Douglas Fornell, Bethlehem, Pennsylvania 18017 (US); NAKSEN, Dennis, Summit, New Jersey 07901 (US)
(74) Representative: Haseltine Lake Kempner LLP
(86) International application number: PCT/US2016/035674
(87) International publication number: WO 2016/196899

(56) References cited:
- EP-A2- 2 062 670
- EP-A2- 2 062 700
- EP-A2- 2 535 150
- DE-A1-102006 000 543
- US-A- 5 200 658
- US-A- 6 043 575
- US-A1- 2002 096 342
- US-A1- 2003 121 679
- US-A1- 2003 121 679
- US-A1- 2003 136 570
- US-A1- 2005 257 945
- US-A1- 2012 138 329
- US-A1- 2013 062 498

## Description

### RELATED APPLICATION

The present application relates to and claims priority to U.S. Provisional Patent Application, Serial No. 62/171,768, filed on June 5, 2015, and U.S. Patent Application, Serial No. 15/172,214, filed June 3, 2016, entitled "Power Tool Housings."

### TECHNICAL FIELD AND SUMMARY

The present disclosure relates, generally, to housings for power tools and, more particularly, to housings for cordless power tools, such as cordless impact tools.

As prior art there may be mentioned:
US2012/138329, which discloses a pneumatic impact wrench that includes a main body, a plastic casing provided for fixing a motor casing and a motor module, the motor module having a cylinder for installing a rotor, the rotor being extended from an axle and supported by a bearing, the motor casing having an external case with a hardness greater than that of the plastic casing, and the external case being hollow and penetrating both ends to form a chamber for accommodating and installing a cylinder, and the external case having a stop ring protruded from an internal wall of the chamber and provided for blocking the cylinder, and an external case cover installed at a rear end of the external case for coupling and covering the external case cover;

DE102006000543, which discloses a hand tool device having a multipart housing, which has a motor housing, forming an assembly opening, over which a stator of a motor defining an axis is inserted in the motor housing. The stator is fixed in the inserted position by an axial arrester, which is axially fixed by two clamping connections, which have two clamping elements, held on two tensioning housings provided on the motor housing. Two additional tensioning housings are provided on the motor housing, which have an axial offset to the former tensioning housings;

US2003/121679, which discloses a rigid preformed insert molded into a plastic housing for a power tool. The power tool further comprises a motor having a shaft, the motor being at least partly supported by the insert, and an impact clutch attached to the insert and operatively coupled to the motor shaft. The motor and clutch have a common axis, with the preformed insert located between the motor and the clutch. The insert fixedly secures the axis of the output shaft of the motor. The insert also forms a seal between the motor and clutch; US2013/062498, which discloses a suspension device including a ring for hanging a power tool and a ring retaining member provided at an upper part of a housing of the power tool. The housing has a grip at a lower part thereof. The ring retaining member is configured such that the ring is movable between a standing position and a lying position and that the ring is retainable in the standing position;

EP2062700, which discloses a power tool housing assembly including a base housing segment and a cover housing segment generally symmetrical to the base housing segment, characterized in that: each housing segment comprises a plurality of assembly bosses defining a respective plurality of apertures accessible from an exterior of the housing assembly, the base housing segment further comprising at least one intermediate fastening boss defining an aperture accessible from an interior of the housing assembly; and a field case having at least one cooperating assembly fastening boss configured for attaching the field case to an interior of the base housing segment, wherein the field case, base housing segment, and cover housing segment cooperate to form a housing assembly that includes an end cap and a mid-handle grip integrally connected via a bridge section and having a longitudinal parting line; and

EP2535150, which discloses an impact tool in which a hammer case into which an output shaft of a motor is inserted is assembled to the front of a housing containing a stator core. In the hammer case, a spindle to which rotation is transmitted from the output shaft of the motor is provided. The rear end of the hammer case is coupled with a bearing box. In the housing, a partition wall through which the output shaft passes is provided between the stator core side and the hammer case side. On the housing, an air inlet is provided. An electric circuit board is provided on the front face of the stator core to close the front face with the output shaft passing therethrough. Between the electric circuit board and the partition wall, a waterproof member through which the output shaft passes is provided to close the gap therebetween.

Existing housings for power tools are typically sized to accommodate motor housings of motors included in the power tools. For example, some power tool housings may include two halves, sometimes referred to as "clam shells," which are secured together to hold the motor housing of the motor within the halves of the power tool housings. In such arrangements, the additional space occupied by the fasteners used to secure the halves of the power tool housings together may cause the size of the power tool housings to be undesirable in certain applications. Accordingly, the present disclosure relates to a power tools having a reduced size.

To that end, an illustrative embodiment of the present disclosure provides a power tool which comprises a front housing, a plurality of fasteners, a back cap, a motor, and a motor housing. The front housing supports an output drive, and the back cap located opposite the front housing. The back cap includes a plurality of apertures each sized to receive one fastener of the plurality of fasteners. The motor housing supports a motor and is located between the front housing and the back cap. The motor includes a rotor that is configured to rotate about a motor axis to drive rotation of the output drive. The at least one fastener of the plurality of fasteners engages the back cap and is disposed in at least one of the plurality of apertures of the back cap. The motor housing includes a plurality of grooves that extend substantially parallel to the motor axis. One groove of the plurality of grooves is aligned with one aperture of the plurality of apertures of the back cap. Each fastener of the plurality of fasteners is disposed through one of the plurality of apertures of the back cap, along one groove of the plurality of grooves of the motor housing, and secures to the front housing coupling the front housing, the motor housing, and the back cap together. Lastly, the plurality of fasteners extends substantially parallel to the motor axis when coupling the front housing, the motor housing, and the back cap together.

In the above and other embodiments of the present disclosure may also comprise: the front housing including a plurality of threaded recesses, wherein each threaded recess being aligned with one groove of the plurality of grooves in the motor housing and each threaded recess being configured to receive one fastener of the plurality of fasteners; a body that wraps around at least a portion of the motor housing between the front housing and the back cap; the body defining an interior space in which the motor housing is positioned and through which the plurality of fasteners extend when the front housing, the motor housing, and the back cap are coupled together; the body further including at least two body parts wherein each of the body parts wrap around at least a portion of the motor housing between the front housing and the back cap; at least one of the at least two body parts includes a flange that engages the front housing; and at least one of the at least two body parts includes a flange that engages the back cap.

Another illustrative embodiment of the present disclosure provides a power tool that also comprises a front housing, a plurality of fasteners, a back cap, a motor, and a motor housing. The front housing supports an output drive, and the back cap is located opposite the front housing. The motor housing supports a motor and is located between the front housing and the back cap. The motor includes a rotor configured to rotate about a motor axis to drive rotation of the output drive. At least one fastener of the plurality of fasteners engages the back cap and secures the motor housing to the front housing. The plurality of fasteners also extends substantially parallel to the motor axis when coupling the front housing, the motor housing, and the back cap together.

In the above and other embodiments of the present disclosure may also comprise: a body that wraps around at least a portion of the motor housing between the front housing and the back cap; the body defines an interior space in which the motor housing is positioned when the front housing, the motor housing, and the back cap are coupled together; the body further including at least two body parts wherein each of the body parts wraps around at least a portion of the motor housing between the front housing and the back cap; at least one of the at least two body parts includes a tab that engages the front housing; and at least one of the at least two body parts includes a tab that engages the back cap.

Another illustrative embodiment of the present disclosure provides a power tool that comprises a front housing, an output drive, a back cap, a motor housing, a motor, and a plurality of fasteners. The front housing supports the output drive. The back cap is located opposite the front housing. The motor housing supports the motor. The motor includes a rotor configured to rotate about a motor axis to drive rotation of the output drive. The plurality of fasteners extends parallel to the motor axis, each of the plurality of fasteners engage the front housing and the motor housing, and the plurality of fasteners extends substantially parallel to the motor axis when coupling the front housing and the motor housing together.

In the above and other embodiments of the present disclosure may also comprise: a back cap that includes a plurality of apertures each sized to receive one fastener of the plurality of fasteners; the motor housing being located between the front housing and the back cap; the motor housing includes a plurality of grooves that extends substantially parallel to the motor axis, and wherein one groove of the plurality of grooves is aligned with one aperture of a plurality of apertures disposed in the back cap; each fastener of the plurality of fasteners is disposed through one of a plurality of apertures disposed in the back cap, along one groove of a plurality of grooves on the motor housing, and secures to the front housing to couple the front housing, the motor housing, and the back cap together; a body that wraps around at least a portion of the motor housing adjacent the front housing, wherein the body defines an interior space in which the motor housing is positioned when the front housing and the motor housing are coupled together, and wherein the body is selected from the group consisting of at least one body part and a plurality of body parts; and the body including at least one tab that engages the front housing.

### BRIEF DESCRIPTION OF THE DRAWINGS

The concepts described in the present disclosure are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels may be repeated among the figures to indicate corresponding or analogous elements.
FIG. 1 is an exploded perspective view of various components held by a housing of a PRIOR ART power tool;
FIG. 2 is a perspective view of a portion of an illustrative power tool according to the present disclosure;
FIG. 3 is a detailed perspective view of an interface between components of a tool housing of the power tool of FIG. 2;
FIG. 4 is another detailed perspective view of an interface between other components of the tool housing of the power tool of FIG. 2;
FIG. 5 is a sectional view taken about line 5-5 of FIG. 4; and
FIG. 6 is a cross-sectional side view of a portion of the power tool of FIG. 2.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the present disclosure.

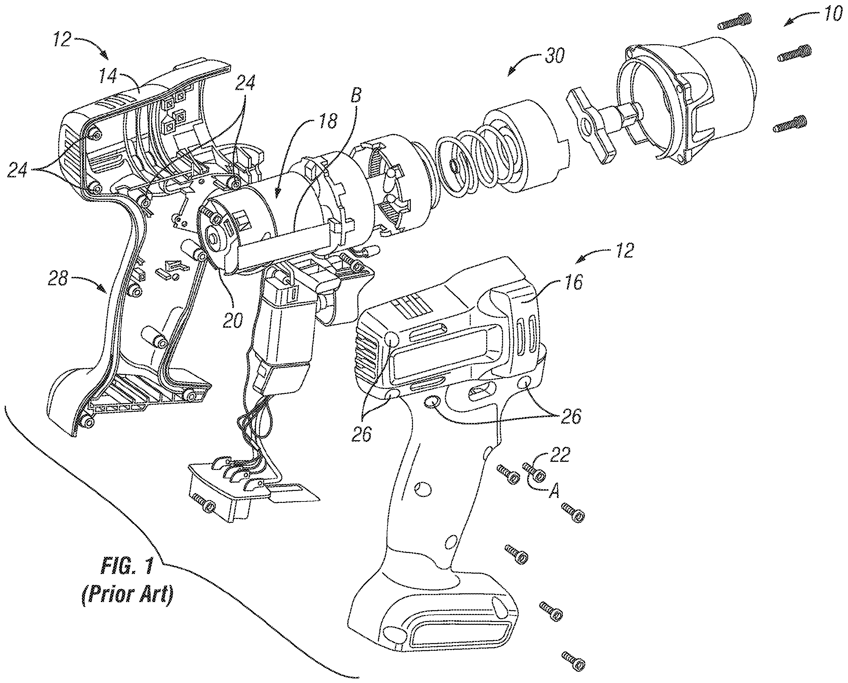

Referring now to FIG. 1, a PRIOR ART power tool 10 is shown. The power tool 10 includes a power tool housing 12 that has a "clam-shell" construction, meaning that internal components of the power tool 10, such as the motor 18 and the motor housing 20, are held by two halves or "clam shells" 14, 16 of the housing 12 which are secured together (along with other housing components) to form the housing 12. This "clam shell" housing 12 is generally divided along a parting plane that passes through both the handle 28 of the power tool 10 and the axis about which the rotor of the motor 18 rotates during operation (which, in this embodiment, is also the axis about which components of an impact mechanism 30 of the power tool 10 rotate during operation). Components of the motor housing 20 are secured together separately from the halves 14, 16 to form the housing 20 that contains the motor 18.

The halves 14, 16 of the housing 12 are configured to receive fasteners 22 to secure the halves 14, 16 together as shown in PRIOR ART FIG. 1. Specifically, the half 14 is formed to include apertures 24, and the half 16 is formed to include apertures 26. During assembly of the tool 10, the halves 14, 16 are aligned to permit the fasteners 22 to be received by corresponding apertures 24, 26 of the halves 14, 16. As such, the fasteners 22 extend in a direction indicated by arrow A that is substantially perpendicular to a direction indicated by arrow B in which the motor 18 and the motor housing 20 extend (the arrow B being generally parallel to the axis about which both the rotor of the motor 18 and the components of the impact mechanism 30 rotate during operation).

In the PRIOR ART design shown in FIG. 1, the fasteners 22 are positioned both above and below the motor 18 and the motor housing 20. In that way, the fasteners 22 extend around the motor 18 and the motor housing 20 (without passing through any component of the motor 18 or the motor housing 20).

The halves 14, 16 are sized to allow the fasteners 22 to extend around the motor 18 and the motor housing 20 when the tool 10 is assembled, as suggested by PRIOR ART FIG. 1. Due to the size of the halves 14, 16, the size of the housing 12 may be undesirable in certain situations, such as when space constraints impeding the use of the tool 10 are present. Alternatives that enable the size of housing 12, and thus the package size of the power tool 10, to be reduced would therefore be beneficial in such situations.

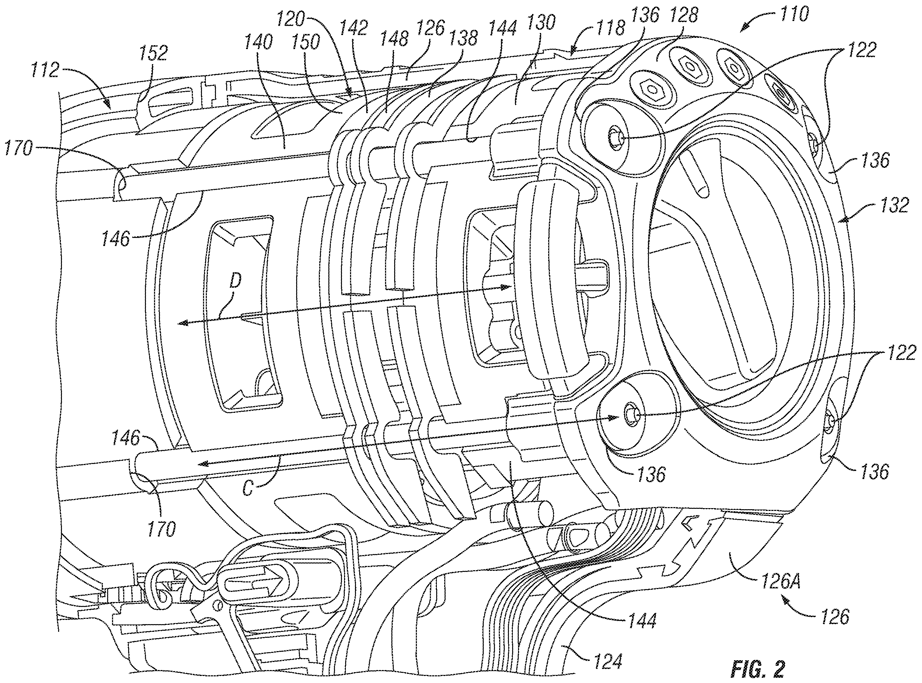

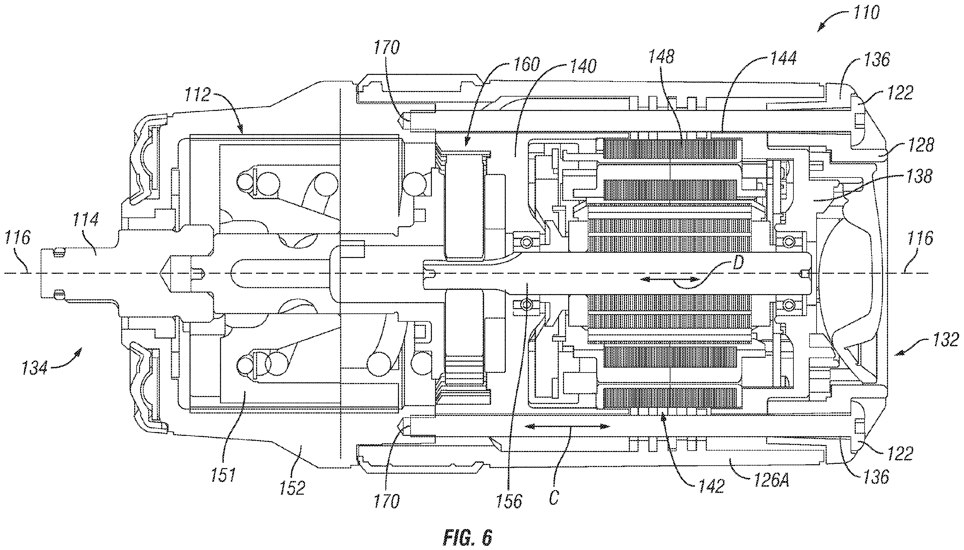

Referring now to FIG. 2, an illustrative power tool 110 according to the present disclosure is shown. Like the power tool 10 of PRIOR ART FIG. 1, the power tool 110 shown in FIG. 2 is illustratively embodied as a cordless, electric impact tool (in particular, an electric, pistol-style impact tool). In various embodiments, the power tool 110 may be embodied as a pistol-grip impact tool, an in-line impact tool, or an angle impact tool, such as a right-angle impact tool. The power tool 110 includes an impact mechanism 112 that is operable to drive rotation of an output drive 114 of the power tool 110 about an axis 116, as best seen in the cross-sectional side view of FIG. 6. It should be appreciated, however, that in other embodiments, the power tool 110 may be embodied as an electric power tool that does not include an impact mechanism, such as a corded or cordless electric drill, driver, or ratchet.

The illustrative power tool 110 includes a tool housing 118 that is broken away to show that the power tool 110 also includes a motor housing 120 and fasteners 122, as best seen in FIG. 2. In contrast to the PRIOR ART power tool 10 of FIG. 1, the tool housing 118 of the tool 110 is not assembled separately from the motor housing 120 of the tool 110. Rather, the fasteners 122 are used to secure components of both the tool housing 118 and the motor housing 120 together, such that the motor housing 120 is supported by the tool housing 118.

The tool housing 118 includes a hammer case 152, a body 126, and a back cap 128, as shown in FIG. 2. The body 126 defines an interior space 130 in which the motor housing 120 is positioned and through which the fasteners 122 extend when the tool 110 is assembled. The hammer case 152 is coupled to the body 126, when the tool 110 is assembled, to close off the interior space 130 and define an output end 134 of the tool 110. The hammer case 152 is formed to include threaded recesses 170 that receive the threaded ends of the fasteners 122 when the tool 110 is assembled. As such, the hammer case 152 may be considered a "front housing" or "front cap" of the tool housing 118. In the illustrative embodiment, the hammer case 152 supports the impact mechanism 112 of the tool 110. The back cap 128 is also coupled to the body 126, when the tool 110 is assembled, to close off the interior space 130 and define a back end 132 that is positioned opposite the output end 134 of the tool 110. The back cap 128 is formed to include apertures 136 that extend through the back cap 128 and open into the interior space 130 when the tool 110 is assembled. These apertures 136 are sized to receive the fasteners 122 as shown in FIG. 2.

The body 126 is illustratively formed from two mirror-image halves 126A, 126B, only one of which is shown in FIG. 2. It should be appreciated, however, that in other embodiments, the body 126 may be formed from a single piece or from more than two pieces. The halves 126A, 126B extend downwardly from the back cap 128 to define a handle 124 which may be grasped by a user of the power tool 110. The halves 126A, 126B each extend between the hammer case 152 and the back cap 128, such that the body 126 supports the motor housing 120 when the tool 110 is assembled, as suggested by FIG. 2. In the illustrative embodiment, the halves 126A, 126B of the body 126 are generally divided along a parting plane that passes through both the handle 124 and the motor housing 120.

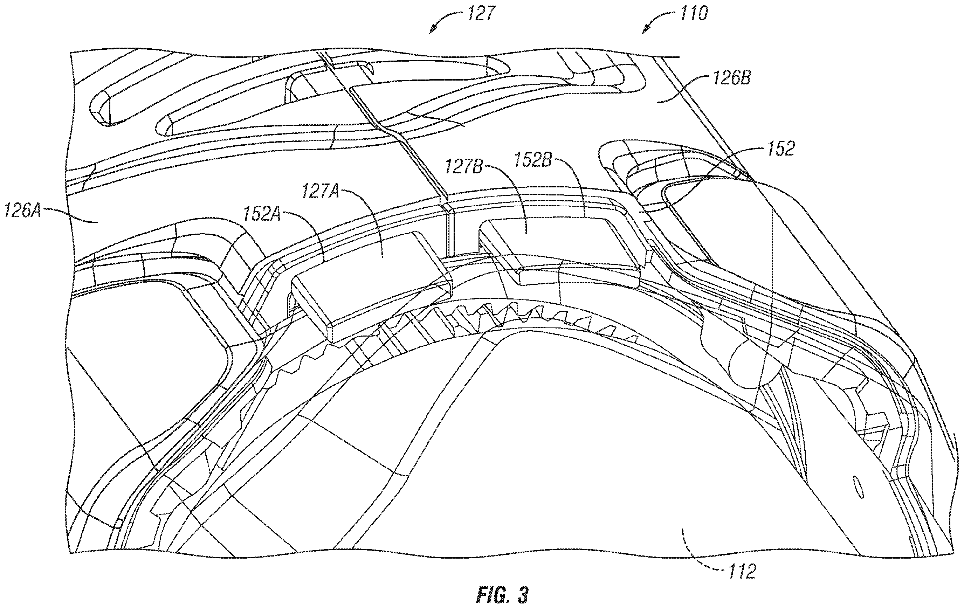

Referring now to FIG. 3, the body 126 illustratively includes features 127 that are used to position the halves 126A, 126B relative to one another during assembly of the tool 110. Specifically, each of the halves 126A, 126B is formed to include a respective flange 127A, 127B that is received by one of a pair of corresponding channels 152A, 152B formed in the hammer case 152 of the tool housing 118 (*see* Fig. 2). When the flanges 127A, 127B are received by the channels 152A, 152B, the halves 126A, 126B are guided toward one another around the motor housing 120 (*see* Fig. 2), thereby minimizing any gap between the halves 126A, 126B and facilitating engagement of the motor housing 120 (*see* Fig. 2) by the body 126 during assembly of the tool 110.

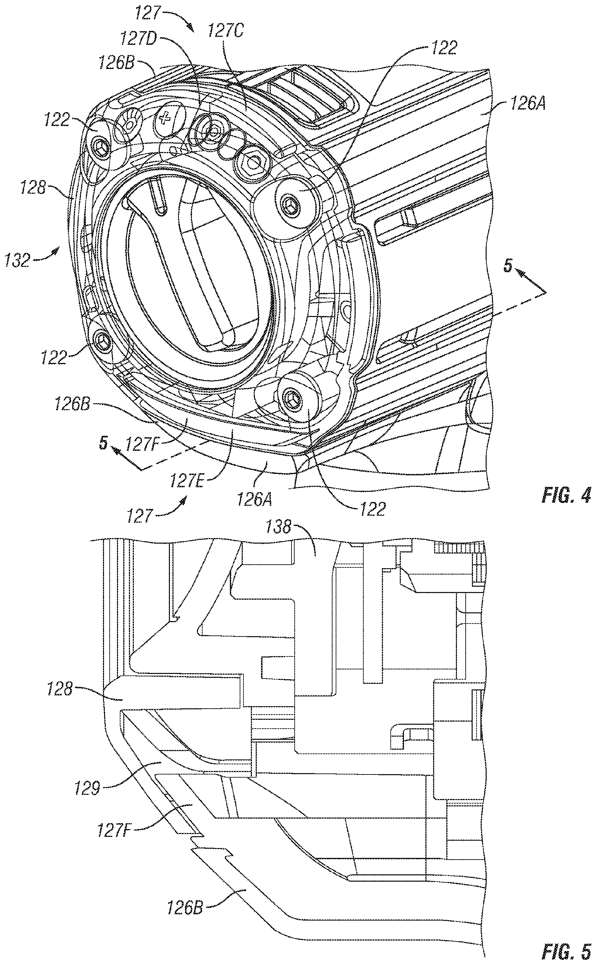

Referring now to FIGS. 4-5, the features 127 also include projections 127C-F that are provided on each of the halves 126A, 126B and received by the back cap 128 during assembly of the tool 110. In the illustrative embodiment, the half 126A includes an upper projection 127C and a lower projection 127E, while the half 126B includes an upper projection 127D and a lower projection 127F. During assembly of the tool 110, the halves 126A, 126B are guided toward one another until the projections 127C, 127D align with and engage one another and the projections 127E, 127F align with and engage one another, thereby minimizing any gap between the halves 126A, 126B. Once the projections 127C-F of the halves 126A, 126B align with and engage one another, the back cap 128 is engaged with the halves 126A, 126B so that the projections 127C-F are received by slots 129 formed in the back cap 128 (one of which is shown in FIG. 5).

The features 127 therefore facilitate attachment of the halves 126A, 126B of the body 126 to the hammer case 152 and the back cap 128 to minimize any gap existing between the halves 126A, 126B during assembly of the tool 110, as shown in FIGS. 3-5. Once the halves 126A, 126B are positioned relative to the hammer case 152 and the back cap 128 as discussed above, the fasteners 122 are used to secure the back cap 128 to the hammer case 152, with the halves 126A, 126B sandwiched between the back cap 128 and the hammer case 152, to assemble the tool housing 118 of the tool 110.

Referring again to FIG. 2, the motor housing 120 includes an end bell 138 that abuts the back cap 128 and an end bell 140 that abuts the hammer case 152 when the tool 110 is assembled. The end bell 140 is adjacent a transmission 160 of the power tool 110 that extends between the end bell 140 and the impact mechanism 112, as best seen in FIG. 6. The end bells 138, 140 cooperatively support a rotor 156 and a stator 148 of a motor 142 of the tool 110. The end bell 138 is formed to include grooves 144 that extend through the end bell 138 parallel to the axis 116. Likewise, the end bell 140 is formed to include grooves 146 that extend through the end bell 140 parallel to the axis 116. When the tool 110 is assembled as shown in FIG. 2, the grooves 144 of the end bell 138 are aligned with the grooves 146 of the end bell 140, both of which are aligned with the apertures 136 of the back cap 128 and with the recesses 170 formed in the hammer case 152.

The end bell 138 of the motor housing 120 and the back cap 128 of the tool housing 118 are illustratively separate components as shown in, and described above with reference to, FIG. 2. It should be appreciated, however, that in other embodiments, the end bell 138 and the back cap 128 may be provided as a unitary or integral component. In other words, in some embodiments, the same component may serve as both the end bell 138 of the motor housing 120 and the back cap 128 of the tool housing 118.

The motor 142 is illustratively embodied as an electric motor, as suggested by FIG. 2. The motor 142 includes a stationary component, i.e., the stator 148, that is positioned between the end bells 138, 140. The motor 142 also includes the rotor 156 which is configured to rotate about the axis 116 to drive rotation of the output drive 114 (via the transmission 160 and the impact mechanism 112). The stator 148 defines channels 150 that extend through the stator 148 parallel to the axis 116. When the tool 110 is assembled as shown in FIGS. 2 and 6, the channels 150 of the stator 148 are aligned with the grooves 144, 146 of the end bells 138, 140, with the apertures 136 of the back cap 128, and with the recesses 170 formed in the hammer case 152.

Referring now to FIGS. 2 and 6, the hammer case 152 of the impact mechanism 112 supports a hammer 151 of the impact mechanism 112. As noted above, the hammer case 152 is formed to include threaded recesses 170 that each receives a threaded end of one of the fasteners 122. These recesses 170 each extend parallel to the axis 116, as best seen in FIG. 6. When the tool 110 is assembled as shown in FIGS. 2 and 6, the recesses 170 of the hammer case 152 are aligned with the channels 150 of the stator 148, the grooves 144, 146 of the end bells 138, 140, and the apertures 136 of the back cap 128.

The fasteners 122 are inserted through the apertures 136, the grooves 144, the channels 150, and the grooves 146, and into the recesses 170 when the tool 110 is assembled, as shown in FIGS. 2 and 6. The fasteners 122 secure the back cap 128 to the hammer case 152, with the body 126 sandwiched between the back cap 128 and hammer case 152, to form the tool housing 118. Additionally, the fasteners 122 secure the end bells 138, 140 around the stator 148 to form the motor housing 120. In that way, the fasteners 122 secure the tool housing 118 and the motor housing 120 together so that the motor housing 120 is supported by the tool housing 118.

The fasteners 122 illustratively extend in a direction indicated by arrow C that is parallel to a direction indicated by arrow D in which the motor 142 and the motor housing 120 extend, as shown in FIGS. 2 and 6. The fasteners 122 engage the back cap 128 and extend therefrom through the interior space 130 to the hammer case 152. The fasteners 122 illustratively include four fasteners in the embodiment of FIGS. 2-6. It should be appreciated, however, that in other embodiments, more or less than four fasteners may be used. Additionally, it should be appreciated that, in some embodiments, fasteners may not be used at all. Rather, clips or metal tie straps, or the like, may be used.

In one respect, because the fasteners 122 extend through the motor 142 and the motor housing 120, rather than around the motor 142 and the motor housing 120, the package size of the power tool 110 may be smaller than the package size of the power tool 10. In another respect, because the motor housing 120 and the tool housing 118 are secured together via one set of fasteners 122, the separate components used to secure the tool housing 12 and the motor housing 20 together may be avoided, and thus the package size of the power tool 110 may be smaller than the package size of the power tool 10.

While certain illustrative embodiments have been described in detail in the figures and the foregoing description, such an illustration and description is to be considered as exemplary and not restrictive in character, it being understood that only illustrative embodiments have been shown. There are a plurality of advantages of the present disclosure arising from the various features of the apparatus, systems, and methods described herein. Those of ordinary skill in the art may readily devise their own implementations of the apparatus, systems, and methods that incorporate one or more of the features of the present disclosure.

## Claims

1. A power tool (110) comprising:
a tool housing (118) comprising a front housing (152) supporting an output drive (114) and a back cap (128) defining a back end (132) of the power tool (110) located opposite the front housing (152);
a motor housing (120) supporting an electric motor (142);
wherein the motor housing (120) comprises a rear endbell (138) and a front endbell (140) that cooperatively support a stator (148) and a rotor (156) of the electric motor (142), the rotor (156) configured to rotate about a motor axis (116) to drive rotation of the output drive, wherein the motor housing (120) is located between the front housing (152) and the back cap (128);
a plurality of fasteners (122);
wherein the back cap (128) includes a plurality of apertures (136) each sized to receive one fastener of the plurality of fasteners (122);
wherein the front endbell (140) and the rear endbell (138) each comprise a plurality of endbell grooves (144,146) that extend substantially parallel to the motor axis (116);
wherein the stator (148) defines stator channels (150) that extend through the stator substantially parallel to the motor axis (116);
wherein one endbell groove (146) of the plurality of endbell grooves (146) of the front endbell (140) and one endbell groove (144) of the plurality of endbell grooves (144) of the rear endbell (138) are aligned with both one stator channel (150) and one aperture (136) of the plurality of apertures (136) of the back cap (128);
wherein each fastener of the plurality of fasteners (122) is disposed through one of the plurality of apertures (136) of the back cap (128), along one endbell groove (144) of the plurality of endbell grooves (144,146) of the rear endbell (138), along one stator channel (150) of the stator (148), along one endbell groove (146) of the plurality of endbell grooves (146) of the front endbell (140), and secures to the front housing to couple the front housing (152), the front endbell (140) of the motor housing (120), the stator (148), the rear endbell (138) of the motor housing (120) and the back cap (128) together; and
wherein the plurality of fasteners (122) extend substantially parallel to the motor axis (116) when coupling the front housing (152), the front endbell (140) of the motor housing (120), the stator (148), the rear endbell (138) of the motor housing (120) and the back cap (128) together.

2. The power tool (110) of Claim 1, wherein the front housing (152) includes a plurality of threaded recesses (177), wherein each threaded recess (177) is aligned with one endbell groove (146) of the plurality of endbell grooves (146) of the front endbell (140), with one endbell groove (144) of the plurality of endbell grooves (144) of the rear endbell (138) and with one stator channel (150), wherein each threaded recess (177) is configured to receive one fastener of the plurality of fasteners (122).

3. The power tool (110) of Claim 1 or 2, wherein the tool housing (118) further comprises a body (126) that wraps around at least a portion of the motor housing (120) between the front housing (152) and the back cap (128).

4. The power tool (110) of Claim 3, wherein the body (126) defines an interior space in which the motor housing (122) is positioned when the front housing (152), the front endbell 140, the stator 148, the rear endbell 138, and the back cap (128) are coupled together.

5. The power tool (110) of Claim 4, wherein the plurality of fasteners (122) extend through the interior space when the front housing (152), the front endbell 140, the stator 148, the rear endbell 138, and the back cap (128) are coupled together.

6. The power tool (110) of any one of Claims 3 to 5, wherein the body (126) comprises at least two body parts (126A, 126B) wherein each of the body parts (126A, 126B) wrap around at least a portion of the motor housing (120) between the front housing (152) and the back cap (128).

7. The power tool (110) of Claim 6, wherein at least one of the at least two body parts (126A, 126B) includes a tab or flange that engages the front housing.

8. The power tool of Claim 6 or 7, wherein at least one of the at least two body parts (126A, 126B) includes a tab or flange (127A, 127B) that engages the back cap (128).

9. The power tool (110) of Claim 1 or 2, further comprising a body (126) that wraps around at least a portion of the motor housing (120) adjacent the front housing (152), wherein the body (126) defines an interior space in which the motor housing (120) is positioned when the front housing (152) and the motor housing (120) are coupled together, and wherein the body (126) is selected from the group consisting of at least one body part and a plurality of body parts.

10. The power tool (110) of Claim 9, wherein the body (126) includes at least one tab that engages the front housing (152).

11. The power tool (110) of any preceding Claim, wherein the power tool (110) does not include any further fasteners between the back cap (128), the rear endbell (138), the stator (148), the front endbell (140) or the front housing (152) in addition to the fasteners disposed through the plurality of apertures (136) of the back cap (128), along the plurality of endbell grooves (144) of the rear endbell (138), along the stator channels (150) of the stator (148), and along the plurality of endbell grooves (146) of the front endbell (140).

## Patentansprüche

1. Elektrowerkzeug (110), umfassend:
ein Werkzeuggehäuse (118), umfassend ein vorderes Gehäuse (152), das einen Ausgangsantrieb (114) aufnimmt, und einen hinteren Deckel (128), der ein hinteres Ende (132) des Elektrowerkzeugs (110) definiert, das sich gegenüber dem vorderen Gehäuse (152) befindet;
ein Motorgehäuse (120), das einen Elektromotor (142) aufnimmt;
wobei das Motorgehäuse (120) ein hinteres Endgehäuse (138) und ein vorderes Endgehäuse (140) umfasst, die zusammenwirkend einen Stator (148) und einen Rotor (156) des Elektromotors (142) aufnehmen, wobei der Rotor (156) konfiguriert ist, um um eine Motorachse (116) zu drehen, um eine Drehung des Ausgangsantriebs anzutreiben, wobei sich das Motorgehäuse (120) zwischen dem vorderen Gehäuse (152) und dem hinteren Deckel (128) befindet;
eine Vielzahl von Befestigungselementen (122);
wobei der hintere Deckel (128) eine Vielzahl von Öffnungen (136) aufweist, die jeweils bemessen sind, um ein Befestigungselement der Vielzahl von Befestigungselementen (122) aufzunehmen;
wobei das vordere Endgehäuse (140) und das hintere Endgehäuse (138) jeweils eine Vielzahl von Endgehäusennuten (144, 146) umfassen, die sich im Wesentlichen parallel zu der Motorachse (116) erstrecken;
wobei der Stator (148) Statorkanäle (150) definiert, die sich im Wesentlichen parallel zu der Motorachse (116) durch den Stator erstrecken;
wobei eine Endgehäusennut (146) der Vielzahl von Endgehäusennuten (146) des vorderen Endgehäuses (140) und eine Endgehäusennut (144) der Vielzahl von Endgehäusennuten (144) des hinteren Endgehäuses (138) sowohl mit einem Statorkanal (150) als auch mit einer Öffnung (136) der Vielzahl von Öffnungen (136) des hinteren Deckels (128) ausgerichtet sind;
wobei jedes Befestigungselement der Vielzahl von Befestigungselementen (122) durch eine der Vielzahl von Öffnungen (136) des hinteren Deckels (128) entlang einer Endgehäusennut (144) der Vielzahl von Endgehäusennuten (144, 146) des hinteren Endgehäuses (138) entlang einem Statorkanal (150) des Stators (148) entlang einer Endgehäusennut (146) der Vielzahl von Endgehäusennuten (146) des vorderen Endgehäuses (140) angeordnet ist und an dem vorderen Gehäuse befestigt ist, um das vordere Gehäuse (152), das vordere Endgehäuse (140) des Motorgehäuses (120), den Stator (148), das hintere Endgehäuse (138) des Motorgehäuses (120) und den hinteren Deckel (128) miteinander zu koppeln; und
wobei sich die Vielzahl von Befestigungselementen (122) im Wesentlichen parallel zu der Motorachse (116) erstreckt, wenn das vordere Gehäuse (152), das vordere Endgehäuse (140) des Motorgehäuses (120), der Stator (148), das hintere Endgehäuse (138) des Motorgehäuses (120) und der hintere Deckel (128) miteinander gekoppelt sind.

2. Elektrowerkzeug (110) gemäß Anspruch 1, wobei das vordere Gehäuse (152) eine Vielzahl von Gewindeaussparungen (177) beinhaltet, wobei jede Gewindeaussparung (177) mit einer Endgehäusennut (146) der Vielzahl von Endgehäusennuten (146) des vorderen Endgehäuses (140), mit einer Endgehäusennut (144) der Vielzahl von Endgehäusennuten (144) des hinteren Endgehäuses (138) und mit einem Statorkanal (150) ausgerichtet ist, wobei jede Gewindeaussparung (177) konfiguriert ist, um ein Befestigungselement der Vielzahl von Befestigungselementen (122) aufzunehmen.

3. Elektrowerkzeug (110) gemäß Anspruch 1 oder 2, wobei das Werkzeuggehäuse (118) ferner einen Körper (126) umfasst, der mindestens einen Abschnitt des Motorgehäuses (120) zwischen dem vorderen Gehäuse (152) und dem hinteren Deckel (128) umhüllt.

4. Elektrowerkzeug (110) gemäß Anspruch 3, wobei der Körper (126) einen Innenraum definiert, in dem das Motorgehäuse (122) positioniert ist, wenn das vordere Gehäuse (152), das vordere Endgehäuse 140, der Stator 148, das hintere Endgehäuse 138 und der hintere Deckel (128) miteinander gekoppelt sind.

5. Elektrowerkzeug (110) gemäß Anspruch 4, wobei sich die Vielzahl von Befestigungselementen (122) durch den Innenraum erstreckt, wenn das vordere Gehäuse (152), das vordere Endgehäuse (140), der Stator (148), das hintere Endgehäuse (138) und der hintere Deckel (128) miteinander gekoppelt sind.

6. Elektrowerkzeug (110) gemäß einem der Ansprüche 3 bis 5, wobei der Körper (126) mindestens zwei Körperteile (126A, 126B) umfasst, wobei jedes von den Körperteilen (126A, 126B) mindestens einen Abschnitt des Motorgehäuses (120) zwischen dem vorderen Gehäuse (152) und dem hinteren Deckel (128) umhüllt.

7. Elektrowerkzeug (110) gemäß Anspruch 6, wobei mindestens eines von den mindestens zwei Körperteilen (126A, 126B) eine Lasche oder einen Flansch beinhaltet, die/der das vordere Gehäuse eingreift.

8. Elektrowerkzeug gemäß Anspruch 6 oder 7, wobei mindestens eines von den mindestens zwei Körperteilen (126A, 126B) eine Lasche oder einen Flansch (127A, 127B) aufweist, die/der den hinteren Deckel (128) eingreift.

9. Elektrowerkzeug (110) gemäß Anspruch 1 oder 2, ferner umfassend einen Körper (126), der mindestens einen Abschnitt des Motorgehäuses (120) angrenzend an das vordere Gehäuse (152) umhüllt, wobei der Körper (126) einen Innenraum definiert, in dem das Motorgehäuse (120) positioniert ist, wenn das vordere Gehäuse (152) und das Motorgehäuse (120) miteinander gekoppelt sind, und wobei der Körper (126) ausgewählt ist aus der Gruppe, bestehend aus mindestens einem Körperteil und einer Vielzahl von Körperteilen.

10. Elektrowerkzeug (110) gemäß Anspruch 9, wobei der Körper (126) mindestens eine Lasche aufweist, die das vordere Gehäuse (152) eingreift.

11. Elektrowerkzeug (110) gemäß einem vorherigen Anspruchs, wobei das Elektrowerkzeug (110) zusätzlich zu den Befestigungselementen, die durch die Vielzahl von Öffnungen (136) des hinteren Deckels (128), entlang der Vielzahl von Endgehäusennuten (144) des hinteren Endgehäuses (138), entlang der Statorkanäle (150) des Stators (148) und entlang der Vielzahl von Endgehäusennuten (146) des vorderen Endgehäuses (140) angeordnet sind, keine weiteren Befestigungselemente zwischen dem hinteren Deckel (128), dem hinteren Endgehäuse (138), dem Stator (148), dem vorderen Endgehäuse (140) oder dem vorderen Gehäuse (152) beinhaltet.

## Revendications

1. Un outil électrique (110) comprenant :
un boîtier d'outil (118) comprenant un boîtier avant (152) supportant un entraînement de sortie (114) et un capuchon arrière (128) définissant une extrémité arrière (132) de l'outil électrique (110) située à l'opposé du boîtier avant (152) ;
un boîtier de moteur (120) supportant un moteur électrique (142) ;
dans lequel le boîtier de moteur (120) comprend une cloche d'extrémité arrière (138) et une cloche d'extrémité avant (140) qui supportent de manière coopérative un stator (148) et un rotor (156) du moteur électrique (142), le rotor (156) configuré pour tourner autour d'un axe de moteur (116) pour entraîner la rotation de l'entraînement de sortie, dans lequel le boîtier de moteur (120) est situé entre le boîtier avant (152) et le capuchon arrière (128) ;
une pluralité d'éléments de fixation (122) ;
dans lequel le capuchon arrière (128) comprend une pluralité d'ouvertures (136), chacune dimensionnée pour recevoir un élément de fixation de la pluralité d'éléments de fixation (122) ;
dans lequel la cloche d'extrémité avant (140) et la cloche d'extrémité arrière (138) comprennent chacune une pluralité de rainures de cloche d'extrémité (144, 146) qui s'étendent de manière sensiblement parallèle à l'axe du moteur (116) ;
dans lequel le stator (148) définit des canaux de stator (150) qui s'étendent à travers le stator de manière sensiblement parallèle à l'axe du moteur (116) ;
dans lequel une rainure de cloche d'extrémité (146) de la pluralité de rainures de cloche d'extrémité (146) de la cloche d'extrémité avant (140) et une rainure de cloche d'extrémité (144) de la pluralité de rainures de cloche d'extrémité (144) de la cloche d'extrémité arrière (138) sont alignées à la fois avec un canal de stator (150) et une ouverture (136) de la pluralité d'ouvertures (136) du capuchon arrière (128) ;
dans lequel chaque élément de fixation de la pluralité d'éléments de fixation (122) est disposé à travers une de la pluralité d'ouvertures (136) du capuchon arrière (128), le long d'une rainure de cloche d'extrémité (144) de la pluralité de rainures de cloche d'extrémité (144, 146) de la cloche d'extrémité arrière (138), le long d'un canal de stator (150) du stator (148), le long d'une rainure de cloche d'extrémité (146) de la pluralité de rainures de cloche d'extrémité (146) de la cloche d'extrémité avant (140), et se fixe sur le boîtier avant pour coupler le boîtier avant (152), la cloche d'extrémité avant (140) du boîtier de moteur (120), le stator (148), la cloche d'extrémité arrière (138) du boîtier de moteur (120) et le capuchon arrière (128) ensemble ; et
dans lequel la pluralité d'éléments de fixation (122) s'étendent de manière sensiblement parallèle à l'axe du moteur (116) lors du couplage du boîtier avant (152), de la cloche d'extrémité avant (140) du boîtier de moteur (120), du stator (148), de la cloche d'extrémité arrière (138) du boîtier de moteur (120) et du capuchon arrière (128) ensemble.

2. L'outil électrique (110) selon la revendication 1, dans lequel le boîtier avant (152) comprend une pluralité d'évidements filetés (177), dans lequel chaque évidement fileté (177) est aligné avec une rainure de cloche d'extrémité (146) de la pluralité de rainures de cloche d'extrémité (146) de la cloche d'extrémité avant (140), avec une rainure de cloche d'extrémité (144) de la pluralité de rainures de cloche d'extrémité (144) de la cloche d'extrémité arrière (138) et avec un canal de stator (150), dans lequel chaque évidement fileté (177) est configuré pour recevoir un élément de fixation de la pluralité d'éléments de fixation (122).

3. L'outil électrique (110) selon la revendication 1 ou 2, dans lequel le boîtier d'outil (118) comprend en outre un corps (126) qui s'enroule autour d'au moins une partie du boîtier de moteur (120) entre le boîtier avant (152) et le capuchon arrière (128).

4. L'outil électrique (110) selon la revendication 3, dans lequel le corps (126) définit un espace intérieur dans lequel le boîtier de moteur (122) est positionné lorsque le boîtier avant (152), la cloche d'extrémité avant (140), le stator (148), la cloche d'extrémité arrière (138), et le capuchon arrière (128) sont couplés ensemble.

5. L'outil électrique (110) selon la revendication 4, dans lequel la pluralité d'éléments de fixation (122) s'étendent à travers l'espace intérieur lorsque le boîtier avant (152), la cloche d'extrémité avant (140), le stator (148), la cloche d'extrémité arrière (138), et le capuchon arrière (128) sont couplés ensemble.

6. L'outil électrique (110) selon l'une quelconque des revendications 3 à 5, dans lequel le corps (126) comprend au moins deux parties de corps (126A, 126B), dans lequel chacune des parties de corps (126A, 126B) s'enroulant autour d'au moins une partie du boîtier de moteur (120) entre le boîtier avant (152) et le capuchon arrière (128).

7. L'outil électrique (110) selon la revendication 6, dans lequel au moins une de l'au moins deux parties de corps (126A, 126B) comprend une languette ou une bride qui engage le boîtier avant.

8. L'outil électrique selon la revendication 6 ou 7, dans lequel au moins une de l'au moins deux parties de corps (126A, 126B) comprend une languette ou une bride (127A, 127B) qui engage le capuchon arrière (128).

9. L'outil électrique (110) selon la revendication 1 ou 2, comprenant en outre un corps (126) qui s'enroule autour d'au moins une partie du boîtier de moteur (120) adjacent au boîtier avant (152), dans lequel le corps (126) définit un espace intérieur dans lequel le boîtier de moteur (120) est positionné lorsque le boîtier avant (152) et le boîtier de moteur (120) sont couplés ensemble, et dans lequel le corps (126) est choisi dans le groupe constitué par au moins une partie de corps et une pluralité de parties de corps.

10. L'outil électrique (110) selon la revendication 9, dans lequel le corps (126) comprend au moins une languette qui engage le boîtier avant (152).

11. L'outil électrique (110) selon l'une quelconque des revendications précédentes, dans lequel l'outil électrique (110) ne comprend aucun élément de fixation supplémentaire entre le capuchon arrière (128), la cloche d'extrémité arrière (138), le stator (148), la cloche d'extrémité avant (140) ou le boîtier avant (152) en plus des éléments de fixation disposés à travers la pluralité d'ouvertures (136) du capuchon arrière (128), le long de la pluralité de rainures de cloche d'extrémité (144) de la cloche d'extrémité arrière (138), le long des canaux de stator (150) du stator (148), et le long de la pluralité de rainures de cloche d'extrémité (146) de la cloche d'extrémité avant (140).
